# EUROPÄISCHE PATENTSCHRIFT

(11) **EP 2 485 018 B1**
(45) Veröffentlichungstag und Bekanntmachung des Hinweises auf die Patenterteilung: **24.09.2014**
(21) Anmeldenummer: 11000834.9
(22) Anmeldetag: 03.02.2011
(51) Int. Cl.: G01F 1/692

(54) **Strömungsmesseinrichtung**
Flow rate measuring device
Dispositif de mesure d'écoulement

(43) Veröffentlichungstag der Anmeldung: 08.08.2012
(73) Patentinhaber: FESTO AG & Co. KG, 73734 Esslingen (DE)
(72) Erfinder: Wirtl, Hannes, 86956 Schongau (DE); Maichl, Martin, 73084 Salach (DE); Dickhoff, Andreas, 73230 Kirchheim unter Teck (DE)
(74) Vertreter: Abel, Martin

(56) Entgegenhaltungen:
- EP-A1- 0 987 529
- EP-A1- 1 291 621
- EP-A1- 1 635 403
- EP-A2- 2 154 493
- WO-A1-00/59824
- DE-U1- 29 622 830

## Beschreibung

Die Erfindung betrifft eine Strömungsmesseinrichtung, mit mindestens einem Strömungsmesselement, das eine metallische Trägerplatte mit zwei einander entgegengesetzten Plattenflächen, eine auf einer der Plattenflächen angeordnete Isolierschicht und auf der Isolierschicht angeordnete, in Dünnschichttechnik realisierte, elektrisch leitende Strukturen enthält, wobei die leitenden Strukturen ein Heizelement, einen daneben angeordneten Temperatursensor und mit diesen Komponenten verbundene Verbindungsleiter ausbilden, wobei das Heizelement im Bereich einer zwischen den beiden Plattenflächen durchgehenden Aussparung der Trägerplatte angeordnet ist und sich zusammen mit einem sie tragenden Tragabschnitt der Isolierschicht über diese Aussparung hinweg erstreckt, wobei der Tragabschnitt der Isolierschicht schmäler als die Aussparung ausgebildet und an einander entgegengesetzten Längsseiten von jeweils einer mit der Aussparung kommunizierenden Durchbrechung der Isolierschicht flankiert ist, so dass die zu messende Strömung eines Fluides an dem Heizelement vorbei durch das Strömungsmesselement hindurchtreten kann, wobei eine der den Tragabschnitt flankierenden Durchbrechungen in der Form eines ringsum von der Isolierschicht begrenzten Loches ausgebildet ist.

Aus der DE 600 30 333 T2 ist eine Strömungsmesseinrichtung bekannt, bei der ein plattenförmiges Strömungsmesselement mit Hilfe einer zugeordneten Tragstruktur an einer von einem Ansaugrohr gebildeten externen Anwendungskomponente montiert ist. Das Strömungsmesselement befindet sich zur Gänze in einem Gasstrom, dessen Strömung gemessen werden soll, um beispielsweise die Strömungsrate beziehungsweise die Strömungsgeschwindigkeit zu ermitteln. Das Strömungsmesselement besteht aus einer aus Metall bestehenden Trägerplatte, die auf ihrer einen Plattenfläche von einer Isolierschicht überzogen ist, auf der elektrisch leitende Strukturen in Dünnschichttechnik realisiert sind. Die leitenden Strukturen sind von einem weiteren isolierenden Film als Abdeckschicht überzogen. Die leitenden Strukturen enthalten zur Strömungsmessung ein von einem wärmeerzeugungswiderstand gebildetes Heizelement und einen von einem Temperaturmesswiderstand gebildeten Temperatursensor, die an einem Endabschnitt des Strömungsmesselementes benachbart zueinander angeordnet sind. Das Heizelement befindet sich dabei im Bereich einer die Trägerplatte durchsetzenden Aussparung und sitzt auf einem als Tragabschnitt bezeichenbaren Abschnitt der Isolierschicht, die die Aussparung komplett verschließt. Durch die Aussparung wird eine thermische Entkopplung des Heizelementes von der metallischen Trägerplatte erzielt, um zu verhindern, dass die metallische Trägerplatte zu sehr aufgeheizt wird. Das zu messende Fluid kann an beiden großflächigen Seiten des Strömungsmesselementes vorbeiströmen und durch Kontakt mit der Abdeckschicht und der Isolierschicht Wärmeenergie auf das Heizelement übertragen. Bedingt dadurch, dass die Strömung in der unterhalb des Tragabschnittes der Isolierschicht vorhandenen Aussparung der Trägerplatte gestaut werden kann, ist allerdings mit gewissen Messungenauigkeiten zu rechnen.

Aus der DE 19941420 A1 ist eine Leiterplattenanordnung bekannt, bei der auf einer metallischen Trägerplatte zunächst eine Isolierschicht, dann eine Membran und darauf eine Leiterbahn angeordnet sind. Die Leiterbahn überspannt brückenartig eine Ausnehmung in der Trägerplatte, die sowohl von der Isolierschicht als auch von der Membran vollständig überdeckt ist.

Die DE 29622830 U1 offenbar einen Leiterplattennutzen, der mit Trennfugen versehen ist, um ihn in definierter Weise in einzelne Leiterplatten zerteilen zu können.

Aus der EP 1635403 A1 ist ein Metallsubstrat bekannt, das an seiner Unterseite mit einer Biegenut versehen ist.

Die EP 1431718 A2 offenbart ein in Dünnfilmtechnik realisiertes Strömungssensorelement, das mit einem Heizelement und einem Temperaturmesselement ausgestattet ist. Diese Komponenten sind zwischen zwei Keramikfolien angeordnet.

Aus der DE 40 17 877 A1 ist ein Messfühler zur Durchflussüberwachung eines strömenden Mediums bekannt, der über einen rohrförmigen Messkörper verfügt, auf den Temperaturmesselemente aufgeklebt sind. Eines der Temperaturmesselemente kann mit einem Heizstrom beaufschlagt werden, um eine Temperaturdifferenz zu erzeugen und darauf basierend die Strömungsgeschwindigkeit eines vorbeiströmenden Mediums zu bestimmen.

Die WO 00/59824 A1 offenbart eine Strömungsmesseinrichtung der eingangs genannten Art, bei der zwei Trägerrahmen gemeinsam eine Aussparung umgrenzen, die von einem Widerstandsgitter überbrückt ist, das aus freitragenden Mikrostrukturen besteht, die jeweils beidseits von einer Durchbrechung flankiert sind.

Eine Aufgabe der Erfindung besteht darin, Maßnahmen vorzuschlagen, die einen sehr genauen Betrieb der Strömungsmesseinrichtung begünstigen.

Zur Lösung dieser Aufgabe ist in Verbindung mit den eingangs genannten Merkmalen vorgesehen, dass die von dem Tragabschnitt überbrückte Aussparung der Trägerplatte seitlich zu einem Randbereich der Trägerplatte hin offen ist, wobei die diesem Randbereich benachbarte Durchbrechung der Isolierschicht umfangsseitig nur partiell geschlossen und in ihrem dem Tragabschnitt gegenüberliegenden Bereich offen ist.

Auf diese Weise wirkt die von dem Heizelement überspannte Aussparung nicht wie ein einseitig geschlossenes Sackloch, sondern ist Bestandteil einer das Strömungsmesselement quer durchsetzenden Durchtrittsöffnung, die von dem zu messenden Fluid durchströmt werden kann, so dass das Heizelement während eines Messvorgangs optimal umströmt wird und insbesondere der Bildung eines die Messung eventuell verfälschenden Strömungsstaus vorgebeugt wird. Der Tragabschnitt übt weiterhin eine stabilisierende Tragfunktion in Bezug auf das auf ihm liegende Heizelement aus, weist jedoch eine geringere Breite als die darunter liegende Aussparung auf, so dass die Isolierschicht neben dem Tragabschnitt über Durchbrechungen verfügt, die mit der darunter liegenden Aussparung fluidisch verbunden sind und gemeinsam mit dieser die erwähnte Durchtrittsöffnung für das strömende Fluid bilden.

Der Tragabschnitt ist bezogen auf eine Projektion der Aussparung derart platziert, dass er auf einander entgegengesetzten Seiten von je einer mit der Aussparung kommunizierenden Durchbrechung flankiert ist. Die Strömung eines in die Aussparung eintretenden Fluides wird somit von dem Tragabschnitt in zwei diesseits und jenseits am Tragabschnitt und an dem darauf platzierten Heizelement vorbeiströmende Stömungszweige aufgespalten. Die eine der den Tragabschnitt flankierenden Durchbrechungen der Isolierschicht ist in Form eines Loches ausgebildet, das ringsum von der Isolierschicht begrenzt ist. Die andere Durchbrechung ist in einem dem Tragabschnitt gegenüberliegenden Bereich randseitig offen. Letzteres ist von Vorteil, weil die von dem Tragabschnitt überbrückte Aussparung der Trägerplatte nicht fensterartig ausgebildet ist, sondern seitlich zu einem Randbereich der Tragplatte hin offen ist. Eine solche Aussparung hat beispielsweise die Form einer randseitig in der Trägerplatte strukturierten Kerbe.

Die Aufgabe wird auch durch die Merkmale des unabhängigen Anspruchs 4 gelöst.

Vorteilhafte Weiterbildungen der Erfindung gehen aus den Unteransprüchen hervor.

Der Tragabschnitt der Isolierschicht ist insbesondere streifenartig ausgebildet und zweckmäßigerweise so angeordnet, dass er die darunter liegende Aussparung der Trägerplatte stegartig überspannt.

In vorteilhafter Weise sind die elektrisch leitenden Strukturen von einer isolierenden Abdeckschicht zumindest partiell überdeckt. Diese Abdeckschicht ist im Bereich der Aussparung in vergleichbarer Weise wie die Isolierschicht durchbrochen, so dass sie über einen Abdeckabschnitt verfügt, der zusammen mit dem Tragabschnitt das Heizelement umschließt. Der Abdeckabschnitt ist zweckmäßigerweise streifenartig ausgebildet, so dass er gemeinsam mit dem Tragabschnitt und dem dazwischen angeordneten Heizelement einen die Aussparung stegartig überbrückenden Überbrückungsstreifen bildet.

Zur elektrischen Kontaktierung der leitenden Strukturen dienende Anschlussflächen der leitenden Strukturen sind von der Abdeckschicht zweckmäßigerweise nicht überdeckt. Auch besteht die Möglichkeit, die leitenden Strukturen bereichsweise zur Freilegung von Kontaktflächen, an denen elektrische oder elektronische Bauteile angeschlossen werden sollen oder sind, von der Überdeckung mit der Abdeckschicht auszunehmen.

Durch die Umhüllung der leitenden Strukturen durch einerseits die Isolierschicht und andererseits die Abdeckschicht werden die leitenden Strukturen unempfindlich gegen äußere Einflüsse und sind insbesondere vor elektromagnetischen oder auch mechanischen Einflüssen gut geschützt.

Als Isolierschicht und/oder als Abdeckschicht eignet sich insbesondere eine Polyimidschicht.

Die Trägerplatte kann abgesehen von der dem Heizelement zugeordneten Aussparung auch noch in einem oder mehreren anderen Bereichen der elektrisch leitenden Strukturen mit strukturierten Aussparungen versehen sein, deren Tiefe der Plattenstärke der Trägerplatte entspricht oder diesbezüglich auch geringer ist.

Das Strömungsmesselement hat vorzugsweise eine lamellenartige Gestalt. Es verfügt insbesondere über eine geradlinige Erstreckung, kann jedoch in der Längsrichtung auch einfach oder mehrfach abgebogen sein, wenn dies den Zugang zu dem zu messenden Fluid begünstigt. Um einen solchen nichtlinearen Längsverlauf zu realisieren, kann die Trägerplatte mit mindestens einem zwischen den beiden Plattenflächen durchgehenden Trennschlitz versehen sein und/oder über mindestens eine sich ausgehend von der von der Isolierschicht abgewandten Plattenfläche nur ein Stück weit in die Trägerplatte hineinerstreckende Quernut verfügen, die als Biegenut nutzbar ist.

Die Strukturierung der metallischen Trägerplatte ist in vorteilhafter Weise als Ätzstrukturierung ausgebildet, wobei die Ätzstrukturierung auch noch nach der Applizierung der Isolationsschicht durch nachträgliches Ätzen von der Metallseite her realisiert werden kann. Die Isolierschicht dient dabei als Ätzstoppschicht.

Das Strömungsmesselement kann bei lamellenförmiger Ausgestaltung zwei einander entgegengesetzte schmalseitige Endabschnitte aufweisen, von denen der eine einen mit dem Heizelement und mit dem Temperatursensor ausgestatteten Messabschnitt und der andere einen mit Anschlussflächen zur elektrischen Kontaktierung der leitenden Struktur versehenen Anschlussabschnitt bildet. Dies gilt unabhängig davon, ob das Strömungsmesselement über eine geradlinige oder über eine abgewinkelte Längserstreckung verfügt. Eine solche Ausgestaltung begünstigt die Installation am Messort, da sich das Strömungsmesselement zwischen dem Messabschnitt und dem Anschlussabschnitt von einer abdichtenden Haltestruktur umfassen lässt, mit der es derart an einer Anwendungskomponente fixiert werden kann, dass der Messabschnitt in den Strömungsbereich des zu messenden Fluides ragt und der Anschlussabschnitt außerhalb dieses Strömungsbereiches liegt.

Vorzugsweise enthält die Strömungsmesseinrichtung zusätzlich zu dem Strömungsmesselement eine Haltestruktur der vorgenannten Art, mit deren Hilfe das Strömungsmesselement, vorzugsweise lösbar, an einer Anwendungskomponente fixierbar ist. Bei zusammengebauter Strömungsmesseinrichtung ist die Haltestruktur von dem Strömungsmesselement unter Abdichtung durchsetzt, so dass kein Fluidübertritt zwischen dem Messbereich und dem Anschlussbereich stattfinden kann. Die Haltestruktur ist zweckmäßigerweise eine bezüglich des Strömungsmesselements separate, ein- oder mehrteilige Komponente, so dass sie je nach Anwendungsfall mit unterschiedlich ausgelegten Strömungsmesselementen alternativ bestückt werden kann.

Vorzugsweise verfügt die Haltestruktur über ein ring- oder rahmenartig ausgebildetes Dichtelement, das das Strömungsmesselement zwischen dem Messabschnitt und dem Anschlussabschnitt unter Abdichtung umschließt. Es ist möglich, das Dichtelement unter Bildung einer unlösbaren Baueinheit stoffschlüssig an dem Strömungsmesselement anzubringen, so dass es nach Art eines Kragens um das Dichtelement umläuft. Als vorteilhafter wird jedoch eine Realisierung als separates Bauteil angesehen, das bei hindurchgestecktem Strömungsmesselement mit radialer Vorspannung ringsum an der Außenfläche des Strömungsmesselementes dichtend anliegt.

Vorzugsweise ist das Dichtelement so ausgebildet, dass es über eine schlitzartige Öffnung verfügt, durch die das bevorzugt einen länglichen Querschnitt aufweisende Strömungsmesselement im montierten Zustand hindurchgreift. Das Dichtelement ist dabei insbesondere so ausgelegt, dass die schlitzartige Öffnung bei entferntem Strömungsmesselement geschlossen ist, indem die die schlitzartige Öffnung begrenzenden Randbereiche des Dichtelementes mit Vorspannung unter Abdichtung aneinander anliegen. Auf diese Weise besteht die vorteilhafte Möglichkeit, im an einer Anwendungskomponente montierten Zustand der Strömungsmesseinrichtung ohne Entfernung der Haltestruktur einen Austausch des Strömungsmesselementes vorzunehmen und ohne dabei eine Leckage hervorzurufen. Der Betrieb der Anwendungskomponente kann dabei unverändert und ungestört weiterlaufen.

Die Haltestruktur verfügt zweckmäßigerweise über eine insbesondere aus einem starren Material und hierbei insbesondere aus Metall oder aus einem stabilen Kunststoffmaterial bestehende Haltemanschette, die von einer Montageöffnung durchsetzt ist, durch die das Strömungsmesselement im montierten Zustand hindurchgreift. Das Strömungsmesselement ist dabei insbesondere mit Hilfe eines es umschließenden ring- oder rahmenartigen Dichtelementes und eines Spannringes unter Abdichtung an der Haltemanschette fixiert. Die Haltemanschette kann eine Vertiefung aufweisen, die sich an die Montageöffnung axial anschließt und die einerseits von einer die Montageöffnung umschließenden Abstützwand der Haltemanschette begrenzt ist. In dieser Vertiefung sitzt das Dichtelement, das sich hierbei radial innen an dem Strömungsmesselement und radial außen an der Umfangswand der Vertiefung abstützt. Der Spannring kann von der der Abstützwand axial entgegengesetzten Seite her in die Vertiefung eingepresst sein, so dass er das Dichtelement radial verspannt, wodurch das Strömungsmesselement sowohl fixiert als auch gegenüber der Haltemanschette abgedichtet ist.

Die in Bezug auf die Haltestruktur erläuterten Maßnahmen können auch vorteilhaft in Verbindung mit einem Strömungsmesselement realisiert werden, bei dem die Isolierschicht und die gegebenenfalls vorhandene Abdeckschicht im Bereich der dem Heizelement zugeordneten Aussparung nicht durchbrochen sind und die Aussparung somit durch die genannte(n) Schicht(en) insbesondere vollständig verschlossen ist.

Nachfolgend wird die Erfindung anhand der beiliegenden Zeichnung näher erläutert. In dieser zeigen:
- Figur 1: eine bevorzugte Ausführungsform der erfindungsgemäßen Strömungsmesseinrichtung im an einer externen Anwendungskomponente betriebsbereit montierten Zustand in einem Längsschnitt gemäß Schnittebene I-I, wobei allerdings das Strömungsmesselement ungeschnitten abgebildet ist,
- Figur 2: das bei der Strömungsmesseinrichtung aus Figur 1 vorhandene Strömungsmesselement in einer Seitenansicht mit Blickrichtung auf die mit der Isolations-schicht versehene Plattenfläche und ohne Abbildung der vorzugsweise vorhandenen Abdeckschicht,
- Figur 3: einen Längsschnitt durch das Strömungsmesselement gemäß Schnittlinie III-III aus Figuren 1, 2 und 4 und mit Darstellung der vorzugsweise vorhandenen Abdeckschicht,
- Figur 4: einen Querschnitt durch das Strömungsmesselement gemäß Schnittlinie IV-IV aus Figuren 1 bis 3 und einschließlich der Darstellung der Abdeckschicht, und
- Figur 5: einen Querschnitt durch die Strömungsmesseinrichtung aus Figur 1 gemäß Schnittlinie V-V, wobei allerdings das Strömungsmesselement ungeschnitten abgebildet ist.

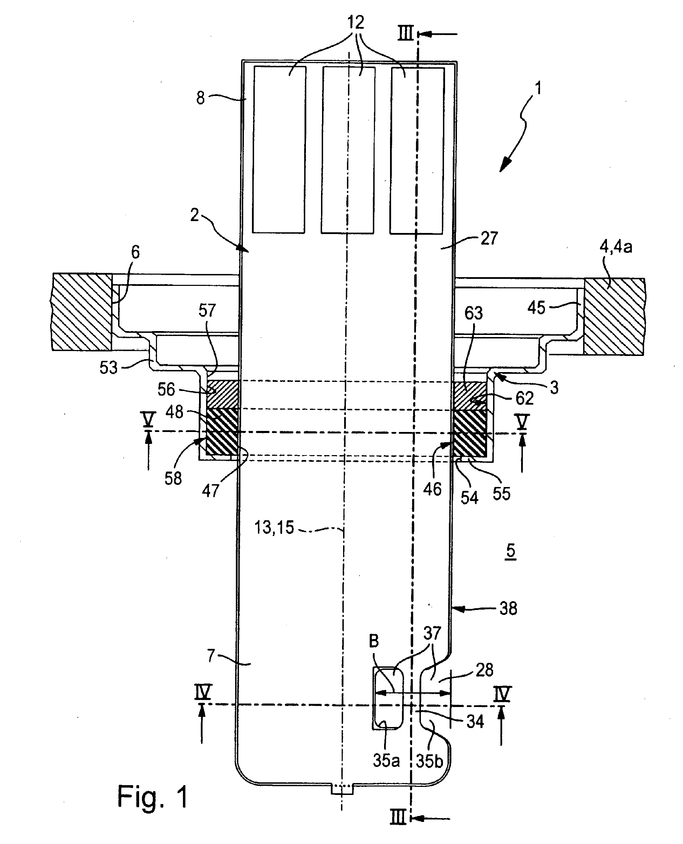

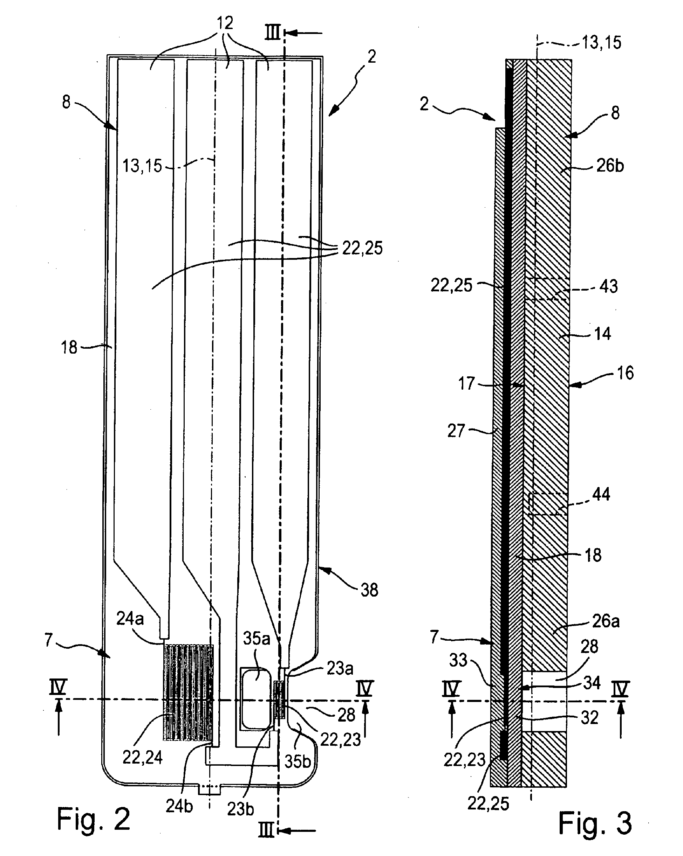

Die beispielhafte Strömungsmesseinrichtung 1 hat als Hauptbestandteile ein in Figuren 2, 3 und 4 auch nochmals separat dargestelltes Strömungsmesselement 2 und eine Haltestruktur 3. Die Haltestruktur 3 dient zur Fixierung der Strömungsmesseinrichtung 1 an einer nur in Figur 1 ausschnittsweise angedeuteten Anwendungskomponente 4.

Die Anwendungskomponente 4 ist ausgebildet, um ein strömendes Fluid zu führen und kann beispielsweise eine Rohrleitung sein, in der ein insbesondere gasförmiges Fluid, insbesondere Druckluft, strömt. Eine solche Anwendungskomponente 4 verfügt regelmäßig über eine einen vom Fluid durchströmten Strömungsraum 5 begrenzende Wandung 4a, die von einer Installationsöffnung 6 durchsetzt ist, in deren Bereich sich die Strömungsmesseinrichtung 1 mit Hilfe der Haltestruktur 3 befestigen lässt. Die Haltestruktur 3 kann zur lösbaren oder zur unlösbaren Befestigung an der Anwendungskomponente 4 ausgebildet sein. Im betriebsbereit installierten Zustand der Strömungsmesseinrichtung 1 taucht ein Messabschnitt 7 des Strömungsmesselementes 2 in den Strömungsraum 5 ein, so dass er von dem zu messenden Fluid umströmt wird. Ein dem Messabschnitt 7 entgegengesetzter Anschlussabschnitt 8 liegt dabei außerhalb des Strömungsraumes 5 und bietet mehrere Anschlussflächen 12, mit denen nicht weiter abgebildete elektrische Leiter kontaktierbar sind, über die das Strömungsmesselement 2 an eine ebenfalls nicht weiter abgebildete elektronische Steuereinrichtung angeschlossen werden kann.

Die beim Ausführungsbeispiel vorhandene Haltestruktur 3 verfügt über einen besonders vorteilhaften Aufbau. Ein davon abweichender Aufbau der Haltestruktur 3 ist jedoch ebenfalls möglich. Ebenso kann die Strömungsmesseinrichtung 1 gänzlich ohne Haltestruktur 3 auskommen und lediglich aus dem Strömungsmesselement 2 bestehen.

Das Strömungsmesselement 2 ist im Wesentlichen plattenförmig ausgebildet und hat eine Längsgestalt mit Längsachse 13. Vorzugsweise ist es lamellenförmig strukturiert. Der Messabschnitt 7 ist von dem einen, der Anschlussabschnitt 8 von dem anderen der beiden einander axial entgegengesetzten Endabschnitte des Strömungsmesselementes 2 gebildet.

Das Strömungsmesselement 2 verfügt über eine längliche, metallische Trägerplatte 14, deren Längsachse 15 mit der Längsachse 13 gleichgerichtet ist. Die Trägerplatte 14 hat zwei rechtwinkelig zu der Längsachse 15 orientierte und voneinander abgewandte großflächige erste und zweite Plattenflächen 16, 17, von denen die erste Plattenfläche 16 zweckmäßigerweise unbelegt ist, während die zweite Plattenfläche 17 mit einer Isolierschicht 18 beschichtet ist. Die Isolierschicht 18 besteht zweckmäßigerweise aus hochbeständigem Polyimid.

Auf der Isolierschicht 18 sind an der der Trägerplatte 14 abgewandten Seite in üblicher Dünnschichttechnik elektrisch leitende Strukturen 22 appliziert. Diese leitenden Strukturen 22 bilden ein Heizelement 23, einen Temperatursensor 24 und mehrere mit dem Heizelement 23 und/oder mit dem Temperatursensor 24 verbundene Verbindungsleiter 25.

Das Heizelement 23 und der Temperatursensor 24 befinden sich im Bereich des dem Messabschnitt 7 zugeordneten vorderen Endabschnittes 26a der Trägerplatte 14. Die Verbindungsleiter 25 erstrecken sich ausgehend von dem Heizelement 23 und dem Temperatursensor 24 insbesondere in der Längsrichtung der Trägerplatte 14 bis hin zu deren rückseitigem Endabschnitt 26b, der dem Anschlussabschnitt 8 zugeordnet ist.

Das Heizelement 23 ist insbesondere in der Form eines Heizwiderstandes realisiert. Gleiches gilt für den Temperatursensor 24. Sowohl das Heizelement 23 als auch der Temperatursensor 24 bestehen insbesondere aus einer mäanderförmigen Leiterstruktur, die jeweils ein erstes Ende 23a, 24a und ein zweites Ende 23b, 24b aufweist. Die beiden ersten Enden 23a, 24a sind mit jeweils einem eigenen Verbindungsleiter 25 elektrisch verbunden. Ein dritter Verbindungsleiter 25 kann an beide zweite Enden 23b, 24b angeschlossen sein.

Die Verbindungsleiter 25 enden im Bereich des rückseitigen Endabschnittes 26b der Trägerplatte 14 mit jeweils einer der weiter oben schon erwähnten Anschlussflächen 12. Diese Anschlussflächen 12 können als Berührkontaktflächen oder als Lötflächen verwendet werden, um zu einer elektronischen Steuereinrichtung führende elektrische Leiter anschließen zu können.

Das Strömungsmesselement 2 verfügt vorzugsweise auch noch über eine Abdeckschicht 27, die von der der Isolierschicht 18 entgegengesetzten Oberseite her auf die elektrisch leitenden Strukturen 22 aufgebracht ist, so dass Letztere sandwichartig zwischen der Isolierschicht 18 und der Abdeckschicht 27 gekapselt aufgenommen sind. Die Abdeckschicht 27 kann die leitenden Strukturen 22 prinzipiell vollständig abdecken. Damit die Anschlussflächen 12 jedoch für Anschlussmaßnahmen gut zugänglich sind, werden selbige von der Abdeckschicht 27 zweckmäßigerweise nicht überdeckt und liegen gemäß Figur 1 frei.

Bei der optionalen Abdeckschicht 27 handelt es sich zweckmäßigerweise wie bei der Isolierschicht 18 um eine Polyimidschicht.

Die Trägerplatte 14 weist im Bereich des Heizelementes 23 eine zwischen der ersten und zweiten Plattenfläche 16, 17 durchgehende Aussparung 28 auf. Diese Aussparung 28 wird von dem Heizelement 23 ebenso überbrückt wie von einem das Heizelement 23 tragenden Tragabschnitt 32 der Isolierschicht 18 und einem Abdeckabschnitt 33 der optional vorhandenen Abdeckschicht 27.

Sowohl der Tragabschnitt 32 als auch die optional vorhandene Abdeckschicht 27 sind vorzugsweise streifenförmig ausgebildet und überspannen die Aussparung 28 stegartig. Der aus dem Tragabschnitt 32, dem Heizelement 23 und - optional - dem Abdeckabschnitt 33 bestehende Materialverbund sei im Folgenden als Überbrückungsstreifen 34 bezeichnet.

Der Überbrückungsstreifen 34 erstreckt sich zweckmäßigerweise parallel zur Längsachse 15 der Tragplatte 14.

Bezogen auf die quer zur Längsrichtung des Überbrückungsstreifens 34 gemessene Breite B der Aussparung 28 ist der Überbrückungsstreifen 34 schmäler ausgebildet als die Aussparung 28 in insbesondere deren an der zweiten Plattenfläche 17 liegendem Mündungsbereich. Sowohl der Tragabschnitt 32 als auch das Heizelement 23 und auch der optionale Abdeckabschnitt 33 haben eine geringere Breite als die Aussparung 28.

Die von dem Tragabschnitt 32 und der optionalen Abdeckschicht 27 nicht überdeckten Bereiche der Aussparung 28 sind im Bereich der zweiten Plattenfläche 17 unabgedeckt und offen. Auf diese Weise ist der Überbrückungsstreifen 34 auf mindestens einer Längsseite und vorzugsweise auf beiden Längsseiten von je einer Durchbrechung 35a, 35b flankiert, die mit der sich anschließenden Aussparung 28 kommuniziert.

Würde sich der Überbrückungsstreifen 34, in Draufsicht auf die zweite Plattenfläche 17 betrachtet, unmittelbar an einen der Längsränder der Aussparung 28 anschließen, wäre er von lediglich einer mit der Aussparung 28 verbundenen Durchbrechung flankiert. Vorteilhafter ist jedoch die beim Ausführungsbeispiel realisierte Anordnung des Überbrückungsstreifens 34 mit Abstand zu den Seitenrändern der Aussparung 28, so dass er auf der einen Längsseite von einer ersten Durchbrechung 35a und auf der zweiten Längsseite von einer zusätzlichen zweiten Durchbrechung 35b flankiert ist.

Die Durchbrechungen 35a, 35b bilden gemeinsam mit der sich an sie anschließenden Aussparung 28 eine das Strömungsmesselement 2 rechtwinkelig zu seiner beim Ausführungsbeispiel mit der Schnittebene I-I zusammenfallenden Hauptausdehnungsebene 36 durchsetzende Durchtrittsöffnung 37, die von einem Fluid durchströmbar ist. Wenn also die Strömungsmesseinrichtung 1 gemäß Figur 1 in Gebrauchsstellung installiert ist, kann das in dem Strömungsraum 5 strömende Fluid durch die Durchtrittsöffnung 37 hindurchströmen und dabei, durch die beiden Durchbrechungen 35a, 35b hindurch, beidseits an dem Überbrückungsstreifen 34 vorbeiströmen. Auf diese Weise wird verhindert, dass in der Aussparung 28 ein Fluidstau auftritt. Im Betrieb der Strömungsmesseinrichtung 1 wird das Heizelement 23 durch das vorbeiströmende Fluid in Abhängigkeit von der Strömungsgeschwindigkeit des Fluides gekühlt, wobei ihm Wärmeenergie entzogen wird. Diese Abkühlung wird schnell detektiert und der durch das Heizelement 23 fließende elektrische Strom wird so weit erhöht, dass die durch das strömende Fluid bewirkte Abkühlung ausgeglichen wird. Dadurch wird eine konstante Temperaturdifferenz zwischen dem Heizelement 23 und dem benachbart dazu angeordneten Temperatursensor 24 gewährleistet. Der Heizstrom ist ein Maß für den Wärmeentzug und somit für die Strömungsgeschwindigkeit des Fluides.

Bei alledem ist das Heizelement 23 durch die es umhüllenden Bestandteile der Isolierschicht 18 und der Abdeckschicht 27 vor einem unmittelbaren Kontakt mit dem vorbeiströmenden Fluid geschützt. Somit kann das Strömungsmesselement 2 auch zur Messung aggressiver Medien eingesetzt werden. Trotz dieser Schutzfunktion kann das Heizelement 23 aufgrund der bezüglich der Aussparung 28 geringeren Breite des Überbrückungsstreifens 34 gut umströmt werden, so dass eine hohe Messgenauigkeit gewährleistet ist.

Indem die Verbindungsleiter 25, die vorzugsweise - wie insbesondere auch das Heizelement 23 und der Temperatursensor 24 - aus Kupfer bestehen, sich großflächig über die zweite Plattenfläche 17 hinweg erstrecken, wird eine schnelle Anpassung an die Umgebungstemperatur zu erzielt.

Insbesondere aus Figuren 1, 2 und 4 ist ersichtlich, dass die von dem Überbrückungsstreifen 34 stegartig überspannte Aussparung 28 der Trägerplatte 14 zweckmäßigerweise seitlich, zu einem Randbereich 38 der Trägerplatte 14 hin, offen ist. Die Aussparung 28 erstreckt sich also vergleichbar einer Kerbe ausgehend von dem Randbereich 38 ein Stück weit quer zu der Längsachse 15 in die Trägerplatte 14 hinein. Einer der beiden oben zur Definition der Breite B der Aussparung 28 herangezogenen Seitenränder der Aussparung 28 ist hier also nicht körperlich vorhanden, sondern ist gedanklich von einer.linearen Verlängerung des vorgenannten Randbereiches 38 gebildet. Der Randbereich 38 ist insbesondere von einem der beiden sich in Längsrichtung der Trägerplatte 14 erstreckenden Seitenränder der Trägerplatte 14 repräsentiert.

Bedingt durch diese umfangsseitig partiell offene Gestaltung der Aussparung 28 ist beim Ausführungsbeispiel auch die dem seitlichen Randbereich 38 benachbarte zweite Durchbrechung 35b umfangsseitig nur partiell geschlossen und insbesondere in ihrem dem Tragabschnitt 32 beziehungsweise dem Überbrückungsstreifen 34 gegenüberliegenden Bereich offen. Die auf der entgegengesetzten Seite des Überbrückungsstreifens 34 liegende erste Durchbrechung 35a hingegen hat die Form eines ringsum von der Isolierschicht 18 und der optional vorhandenen Abdeckschicht 33 begrenzten Loches.

Bei der Trägerplatte 14 handelt es sich zweckmäßigerweise um ein durch Ätzen strukturiertes Substrat. Die Strukturierung kann insbesondere von der ersten Plattenfläche 16 her erfolgen, wobei die Isolierschicht 18 bei Bedarf als Ätzstoppschicht nutzbar ist.

Wenn auf der Trägerplatte 14 außer dem Heizelement 23 und dem Temperatursensor 24 weitere elektrische und/oder elektronische Komponenten angeordnet und insbesondere von der elektrisch leitenden Struktur 22 gebildet sind, besteht bei Bedarf die Möglichkeit, diese Komponenten thermisch und/oder magnetisch vom Metall der Trägerplatte 14 zu entkoppeln, indem auch in ihrem Bereich Aussparungen in der Trägerplatte 14 ausgebildet werden.

Als weitere Variante zur Strukturierung der Trägerplatte 14 können ein oder mehrere Trennschlitze 43 in die Trägerplatte 14 eingeätzt oder auf andere Weise eingeformt sein. Ein solcher Trennschlitz 43 ist in Figur 3 gestrichelt angedeutet. Der Trennschlitz 43 erstreckt sich quer zur Längsachse 15 über die gesamte Breite der Trägerplatte 14 und außerdem über die gesamte Plattenhöhe, also durchgehend zwischen beiden Plattenflächen 16, 17. Da das Strömungsmesselement im Bereich eines Trennschlitzes 43 nur noch durch den sich darauf befindenden Aufbau aus Isolierschicht 18, leitenden Strukturen 22 und optionaler Abdeckschicht 27 zusammengehalten wird, ist eine leichte Durchtrennung möglich, um die Baulänge des Strömungsmesselementes 2 bei Bedarf verkürzen zu können.

Als weitere Strukturierungsmöglichkeit für die Trägerplatte 14 sind eine oder mehrere in Figur 3 nur gestrichelt angedeutete Quernuten 44 zu erwähnen, die sich ausgehend von der ersten Plattenfläche 16 nur ein Stück weit in die Trägerplatte 14 hinein erstrecken und vor dem Erreichen der zweiten Plattenfläche 17 enden. Auch diese mindestens eine Quernut 44 erstreckt sich über die gesamte Breite der Trägerplatte 14. Derartige Quernuten 44 können insbesondere als Biegenuten genutzt werden, in deren Bereich sich das Strömungsmesselement 2 wegen des verringerten Querschnittes der Trägerplatte 14 leicht biegen lässt, um dem Strömungsmesselement 2, anders als beim Ausführungsbeispiel, eine nichtlineare und insbesondere einfach oder mehrfach abgebogene Längsgestalt zu verleihen.

Im Folgenden wird eine besonders vorteilhafte Ausgestaltung der Haltestruktur 3 beschrieben. Diese Haltestruktur 3 kann im Übrigen auch vorteilhaft mit einem Strömungsmesselement 2 kombiniert werden, bei dem die Aussparung 28 durch die Isolierschicht 18 und die optional vorhandene Abdeckschicht 27 vollständig verschlossen ist. Besonders vorteilhaft ist allerdings eine Kombination der Haltestruktur 3 mit der erfindungsgemäßen Ausgestaltung des Schichtaufbaus.

Die Haltestruktur 3 ermöglicht ein bevorzugt lösbares Fixieren des Strömungsmesselementes 2 an der schon erwähnten Anwendungskomponente 4. Die Haltestruktur 3 verfügt über eine zur Befestigung an der Anwendungskomponente 4 dienende Befestigungsstruktur 45 und weist eine bevorzugt schlitzartig ausgebildete Durchbrechung 46 auf, durch die das Strömungsmesselement 2 derart weit axial hindurchsteckbar ist, dass sein Messabschnitt 7 auf der einen Seite und sein Anschlussabschnitt 8 auf der entgegengesetzten Seite der Haltestruktur 3 zu liegen kommt. Dieser Gebrauchszustand der Strömungsmesseinrichtung 1 ist aus Figur 1 ersichtlich.

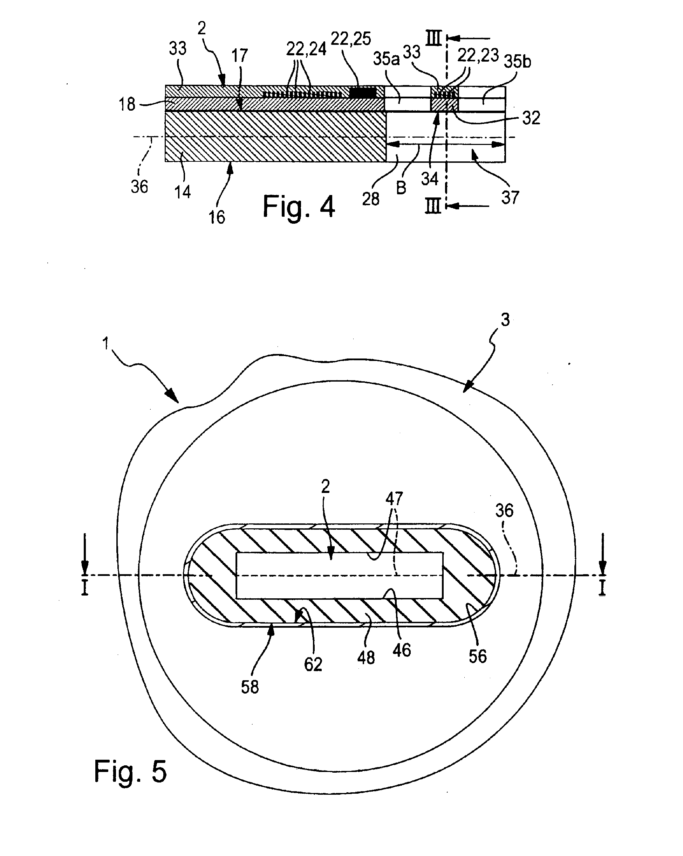

Vorzugsweise ist das Strömungsmesselement 2 unter Abdichtung und jederzeit auch wieder herausziehbar in die Durchbrechung 46 eingesteckt. Die Durchbrechung 46 wird dabei zumindest teilweise von einer bevorzugt schlitzartigen Öffnung 47 eines bevorzugt aus Material mit gummielastischen Eigenschaften bestehenden Dichtelementes 48 der Haltestruktur 3 gebildet. Die schlitzartige Öffnung 47 durchsetzt das Dichtelement 48, so dass selbiges, wie insbesondere die Figur 5 zeigt, ring- oder rahmenartig geformt ist und über gummielastische Randbereiche 52 verfügt, die die schlitzartige Öffnung 47 umgrenzen.

Wenn das Strömungsmesselement 2 durch die Durchbrechung 46 hindurchgreift, erstreckt es sich auch durch die schlitzartige Öffnung 47 hindurch, die hierbei aufgeweitet wird, so dass die Randbereiche 52 unter Abdichtung rings um das Strömungsmesselement 2 herum an dessen Außenumfang anliegen. Abweichend von diesem Ausführungsbeispiel könnte das Dichtelement 48 auch in unlösbarer Baueinheit mit dem Strömungsmesselement 2 ausgebildet sein und das Strömungsmesselement 2 insbesondere kragenartig umschließen. Hierbei kann es insbesondere stoffschlüssig, insbesondere durch Spritzgießen oder durch Verkleben, am Außenumfang des Strömungsmesselementes 2 fixiert sein.

Die Haltestruktur 3 verfügt vorzugsweise über eine insbesondere aus einem starren Material bestehende und vorzugsweise kreisförmig konturierte Haltemanschette 53. Diese kann in axialer Richtung mehrfach abgestuft sein. Sie besteht insbesondere aus Metall oder aus einem stabilen Kunststoffmaterial. Ein Bereich größten Außendurchmessers der Haltemanschette 53 bildet zweckmäßigerweise die Befestigungsstruktur 45, die zweckmäßigerweise von einem hülsenförmigen Endabschnitt der Haltemanschette 53 gebildet ist.

Die Haltemanschette 53 lässt sich mit der Befestigungsstruktur 45 an oder in der Installationsöffnung 6 fixieren. Sie kann insbesondere mit dem vorgenannten hülsenförmigen Endabschnitt in die Installationsöffnung 6 unter Abdichtung eingepresst sein.

Die Haltestruktur 3 verfügt, in einem zu der Befestigungsstruktur 45 bevorzugt axial beabstandeten Endbereich, über eine einen Bestandteil der Durchbrechung 46 bildende Montageöffnung 54. Selbige hat insbesondere einen länglichen Querschnitt mit geringfügig größeren Querschnittsabmessungen als das Strömungsmesselement 2. Selbiges kann somit unter radialem Spiel durch die Montageöffnung 54 hindurchgeführt werden.

Die Montageöffnung 54 ist von einer ringförmigen Abstützwand 55 umrahmt, die den axial orientierten Boden einer sich axial an die Montageöffnung 54 hin anschließenden Vertiefung 56 bildet, die durch eine entsprechende Formgebung der Haltemanschette 53 ausgebildet ist. Die Vertiefung 56 hat eine der Abstützwand 55 axial entgegengesetzte und bei eingestecktem Strömungsmesselement 2 nach außen, in Richtung zu dem Anschlussabschnitt 8 weisende Vertiefungsöffnung 57.

Das Dichtelement 48 ist durch die Vertiefungsöffnung 57 hindurch in die Vertiefung 56 eingesetzt und stützt sich axial an der Abstützwand 55 ab. Gleichzeitig liegt sie mit ihrer radial nach außen orientierten Außenumfangsfläche 58 an der Innenumfangsfläche 62 der Vertiefung 56 an. Durch das hindurchgesteckte Strömungsmesselement 2 wird das Dichtelement 48 radial aufgeweitet und dadurch seine Außenfläche 58 verstärkt unter Abdichtung an die Innenumfangsfläche 62 der Vertiefung 56 angepresst.

Das Dichtelement 48 ist zweckmäßigerweise mit Hilfe eines zusätzlichen, separaten Spannringes 63 der Haltestruktur 3 axial unbeweglich in der Vertiefung 56 gehalten. Der Spannring 63, der insbesondere aus Metall oder aus einem harten Kunststoffmaterial besteht, ist auf das Strömungsmesselement 2 aufgesteckt und derart in die Vertiefung 56 eingesteckt, dass er auf der der Abstützwand 55 axial entgegengesetzten Seite des Dichtelementes 48 zu liegen kommt. Vorzugsweise ist der Spannring 63 in die Vertiefung 56 eingepresst und darin im Presssitz fixiert, wobei er mit der Innenumfangsfläche 62 der Vertiefung 56 radial verspannt ist.

Das Dichtelement 48 ist zwischen der Abstützwand 55 und dem Spannring 63 zweckmäßigerweise derart axial verspannt, dass bei herausgezogenem Strömungsmesselement 2 die die schlitzartige Öffnung 47 begrenzenden Randbereiche 52 des Dichtelementes 48 dichtend aneinander anliegen und dadurch die schlitzartige Öffnung 47 fluiddicht verschließen. Auf diese weise kann das Strömungsmesselement 2 im laufenden Betrieb der Anwendungskomponente 4 aus der Haltestruktur 3 herausgezogen werden, ohne eine Leckage hervorzurufen.

## Patentansprüche

1. Strömungsmesseinrichtung, mit mindestens einem Strömungsmesselement (2), das eine metallische Trägerplatte (14) mit zwei einander entgegengesetzten Plattenflächen (16, 17), eine auf einer der Plattenflächen (17) angeordnete Isolierschicht (18) und auf der Isolierschicht (18) angeordnete, in Dünnschichttechnik realisierte, elektrisch leitende Strukturen (22) enthält, wobei die leitenden Strukturen (22) ein Heizelement (23), einen daneben angeordneten Temperatursensor (24) und mit diesen Komponenten (23, 24) verbundene Verbindungsleiter (25) ausbilden, wobei das Heizelement (23) im Bereich einer zwischen den beiden Plattenflächen (16, 17) durchgehenden Aussparung (28) der Trägerplatte (14) angeordnet ist und sich zusammen mit einem sie tragenden Tragabschnitt (32) der Isolierschicht (18) über diese Aussparung (28) hinweg erstreckt, wobei der Tragabschnitt (32) der Isolierschicht (18) schmäler als die Aussparung (28) ausgebildet und an einander entgegengesetzten Längsseiten von jeweils einer mit der Aussparung (28) kommunizierenden Durchbrechung (35a, 35b) der Isolierschicht (18) flankiert ist, so dass die zu messende Strömung eines Fluides an dem Heizelement (23) vorbei durch das Strömungsmesselement (2) hindurchtreten kann, wobei eine der den Tragabschnitt (32) flankierenden Durchbrechungen (35a) in der Form eines ringsum von der Isolierschicht (18) begrenzten Loches ausgebildet ist, **dadurch gekennzeichnet, dass** die von dem Tragabschnitt (32) überbrückte Aussparung (28) der Trägerplatte (14) seitlich zu einem Randbereich (38) der Trägerplatte (14) hin offen ist, wobei die diesem Randbereich (38) benachbarte Durchbrechung (35b) der Isolierschicht (18) umfangsseitig nur partiell geschlossen und in ihrem dem Tragabschnitt (32) gegenüberliegenden Bereich offen ist.

2. Strömungsmesseinrichtung nach Anspruch 1, **dadurch gekennzeichnet, dass** der Tragabschnitt (32) der Isolierschicht (18) streifenartig ausgebildet ist und die Aussparung (28) der Trägerplatte (18) stegartig überspannt.

3. Strömungsmesseinrichtung nach Anspruch 1 oder 2, **dadurch gekennzeichnet, dass** das Strömungsmesselement (2) eine auf den leitenden Strukturen (22) angeordnete und diese leitenden Strukturen (22) zumindest partiell abdeckende Abdeckschicht (27) aufweist, die im Bereich der den Tragabschnitt (32) flankierenden mindestens einen Durchbrechung (35a, 35b) ebenfalls durchbrochen ist, wobei das Heizelement (23) zweckmäßigerweise zwischen einem streifenförmigen Tragabschnitt (32) der Isolierschicht (18) und einem streifenartigen Abdeckabschnitt (33) der Abdeckschicht (27) angeordnet ist.

4. Strömungsmesseinrichtung, mit mindestens einem Strömungsmesselement (2), das eine metallische Trägerplatte (14) mit zwei einander entgegengesetzten Plattenflächen (16, 17), eine auf einer der Plattenflächen (17) angeordnete Isolierschicht (18) und auf der Isolierschicht (18) angeordnete, in Dünnschichttechnik realisierte, elektrisch leitende Strukturen (22) enthält, wobei die leitenden Strukturen (22) ein Heizelement (23), einen daneben angeordneten Temperatursensor (24) und mit diesen Komponenten (23, 24) verbundene Verbindungsleiter (25) ausbilden, wobei das Heizelement (23) im Bereich einer zwischen den beiden Plattenflächen (16, 17) durchgehenden Aussparung (28) der Trägerplatte (14) angeordnet ist und sich zusammen mit einem sie tragenden Tragabschnitt (32) der Isolierschicht (18) über diese Aussparung (28) hinweg erstreckt, wobei der Tragabschnitt (32) der Isolierschicht (18) schmäler als die Aussparung (28) ausgebildet und von lediglich einer mit der Aussparung (28) kommunizierenden Durchbrechung (35a) der Isolierschicht (18) flankiert ist, so dass die zu messende Strömung eines Fluides an dem Heizelement (23) vorbei durch das Strömungsmesselement (2) hindurchtreten kann, wobei die den Tragabschnitt (32) flankierende Durchbrechung (35a) in der Form eines ringsum von der Isolierschicht (18) begrenzten Loches ausgebildet ist, **dadurch gekennzeichnet, dass** die von dem Tragabschnitt (32) überbrückte Aussparung (28) der Trägerplatte (14) seitlich zu einem Randbereich (38) der Trägerplatte (14) hin offen ist und sich der Tragabschnitt (32) unmittelbar an einen der Längsränder der Aussparung (28) anschließt.

5. Strömungsmesseinrichtung nach einem der Ansprüche 1 bis 4, **dadurch gekennzeichnet, dass** der elektrischen Kontaktierung der leitenden Strukturen (22) dienende Anschlussflächen (12) der leitenden Strukturen (22) von der Abdeckschicht (27) nicht überdeckt sind.

6. Strömungsmesseinrichtung nach einem der Ansprüche 1 bis 5, **dadurch gekennzeichnet, dass** die Isolierschicht (18) und/oder die Abdeckschicht (27) aus Polyimidmaterial besteht.

7. Strömungsmesseinrichtung nach einem der Ansprüche 1 bis 6, **dadurch gekennzeichnet, dass** die Trägerplatte (14) zusätzlich zu der dem Heizelement (23) zugeordneten Aussparung (28) mit mindestens einem quer verlaufenden und zwischen den beiden Plattenflächen (16, 17) durchgehenden Trennschlitz (43) und/oder mit mindestens einer sich ausgehend von der von der Isolierschicht (18) abgewandten Plattenfläche (16) nur ein Stück weit in die Trägerplatte (14) hineinerstreckenden Quernut (44) versehen ist.

8. Strömungsmesseinrichtung nach einem der Ansprüche 1 bis 7, **dadurch gekennzeichnet, dass** das Strömungsmesselement (2) lamellenförmig ausgebildet ist, wobei es zwei einander entgegengesetzte Endabschnitte aufweist, von denen der eine einen mit dem Heizelement (23) und dem Temperatursensor (24) ausgestatteten Messabschnitt (7) und der andere einen mit Anschlussflächen (12) zur elektrischen Kontaktierung der leitenden Strukturen (22) versehenen Anschlussabschnitt (8) bildet.

9. Strömungsmesseinrichtung nach einem der Ansprüche 1 bis 8, **dadurch gekennzeichnet, dass** sie zusätzlich zu dem Strömungsmesselement (2) eine zu dessen Fixierung an einer Anwendungskomponente (4) dienende Haltestruktur (3) aufweist, die von dem Strömungsmesselement (2) unter Abdichtung durchsetzt oder durchsetzbar ist, so dass ein das Heizelement (23) und den Temperatursensor (24) aufweisender Messabschnitt (7) des Strömungsmesselementes (2) auf der einen Seite der Haltestruktur (3) und ein mit Anschlussflächen (12) für die elektrische Kontaktierung der leitenden Strukturen (22) versehener Anschlussabschnitt (8) des Strömungsmesselementes (2) auf der anderen Seite der Haltestruktur (3) angeordnet ist.

10. Strömungsmesseinrichtung nach Anspruch 9, **dadurch gekennzeichnet, dass** die Haltestruktur (3) ein ring- oder rahmenartig ausgebildetes Dichtelement (48) aufweist, das das die Haltestruktur (3) durchsetzende Strömungsmesselement (2) unter Abdichtung umschließt.

11. Strömungsmesseinrichtung nach Anspruch 10, **dadurch gekennzeichnet, dass** das Dichtelement (48) ein bezüglich des Strömungsmesselementes (2) separates Bauteil ist und über eine von dem Strömungsmesselement (2) durchsetzte oder durchsetzbare schlitzartige Öffnung (47) verfügt, wobei es zweckmäßigerweise aus Material mit gummielastischen Eigenschaften besteht und insbesondere derart ausgebildet ist, dass seine die schlitzartige Öffnung (47) begrenzenden Randbereiche (52) bei entferntem Strömungsmesselement (2) unter Verschluss der schlitzartigen Öffnung (47) dichtend aneinander anliegen.

12. Strömungsmesseinrichtung nach einem der Ansprüche 9 bis 11, **dadurch gekennzeichnet, dass** die Haltestruktur (3) über eine zweckmäßigerweise aus einem starren Material bestehende Haltemanschette (53) verfügt, die eine von dem Strömungsmesselement (2) durchsetzte oder durchsetzbare Montageöffnung (54) aufweist und an der das Strömungsmesselement (2) fixiert oder fixierbar ist.

13. Strömungsmesseinrichtung nach Anspruch 12 in Verbindung mit Anspruch 10 oder 11, **dadurch gekennzeichnet, dass** die Montageöffnung (54) von einer Abstützwand (55) der Haltemanschette (53) umrahmt ist, an die das Dichtelement (48) axial angepresst oder anpressbar ist, wobei die Anpresskraft zweckmäßigerweise von einem das Strömungsmesselement (2) umschließenden Spannring (63) geliefert wird, der das Dichtelement (48) an der der Abstützwand (55) entgegengesetzten Stirnseite beaufschlagt und gegen die Abstützwand (55) drückt und der zweckmäßigerweise im Presssitz in einer sich axial an die Montageöffnung (54) anschließenden Vertiefung (56) der Haltemanschette (53) befestigt ist.

## Claims

1. Flow measuring device with at least one flow measuring element (2), containing a metal support plate (14) with two opposite plate surfaces (16, 17), an insulating layer (18) provided on one of the plate surfaces (17), and electrically conductive structures (22) provided on the insulating layer (18) and realised in thin-film technology, wherein the conductive structures (22) form a heating element (23), a temperature sensor (24) mounted adjacent to the former, and connecting leads (25) connected to these components (23, 24), wherein the heating element (23) is located in the area of a recess (28) of the support plate (14) passing through between the two plate surfaces (16, 17) and extending, together with a carrying section (32) of the insulating layer (18) which supports it, beyond this recess (28), wherein the carrying section (32) of the insulating layer (18) is narrower than the recess (28) and is flanked on opposite long sides of respectively one through hole (35a, 35b) of the insulating layer (18) communicating with the recess (28), so that the flow of a fluid to be measured is able to carry on past the heating element (23) and through the flow measuring element (2), wherein one of the through holes (35a) flanking the carrying section (32) is in the form of a hole bounded all around by the insulating layer (18), **characterised in that** the recess (28) of the support plate (14) covered by the carrying section (32) is open at the side towards a boundary zone (38) of the support plate (14), wherein the through hole (35b) of the insulating layer (18) adjacent to this boundary zone (38) is only partly closed on the peripheral side and is open **in that** part of it lying opposite the carrying section (32).

2. Flow measuring device according to claim 1, **characterised in that** the carrying section (32) of the insulating layer (18) is strip-shaped in form and spans the recess (28) of the insulating layer (18) in a web-like manner.

3. Flow measuring device according to claim 1 or 2, **characterised in that** the flow measuring element (2) has a covering layer (27) arranged on the conductive structures (22) and at least partly covering these conductive structures (22) and which, in the area of the through hole or holes (35a, 35b) flanking the carrying section (32) is similarly penetrated, wherein the heating element (23) is expediently provided between a strip-shaped carrying section (32) of the insulating layer (18) and a strip-shaped covering section (33) of the covering layer (27).

4. Flow measuring device with at least one flow measuring element (2), containing a metal support plate (14) with two opposite plate surfaces (16, 17), an insulating layer (18) provided on one of the plate surfaces (17), and electrically conductive structures (22) provided on the insulating layer (18) and realised in thin-film technology, wherein the conductive structures (22) form a heating element (23), a temperature sensor (24) mounted adjacent to the former, and connecting leads (25) connected to these components (23, 24), wherein the heating element (23) is located in the area of a recess (28) of the support plate (14) passing through between the two plate surfaces (16, 17) and extending, together with a carrying section (32) of the insulating layer (18) which supports it, beyond this recess (28), wherein the carrying section (32) of the insulating layer (18) is narrower than the recess (28) and is flanked by only one through hole (35a) of the insulating layer (18) communicating with the recess (28), so that the flow of a fluid to be measured is able to carry on past the heating element (23) and through the flow measuring element (2), wherein the through hole (35a) flanking the carrying section (32) is in the form of a hole bounded all around by the insulating layer (18), **characterised in that** the recess (28) of the support plate (14) covered by the carrying section (32) is open at the side towards a boundary zone (38) of the support plate (14), and the carrying section (32) directly adjoins one of the longitudinal edges of the recess (28).

5. Flow measuring device according to any of claims 1 to 4, **characterised in that** the connection surfaces (12) of the conductive structures (22) serving for electrical contacting of the conductive structures (22) are not covered by the covering layer (27).

6. Flow measuring device according to any of claims 1 to 5, **characterised in that** the insulating layer (18) and/or the covering layer (27) are made of polyimide material.

7. Flow measuring device according to any of claims 1 to 6, **characterised in that** the support plate (14) is provided with, in addition to the recess (28) assigned to the heating element (23), at least one dividing slot (43) running transversely and passing through between the two plate surfaces (16, 17) and/or with at least one lateral slot (44) starting from the plate surface (16) facing away from the insulating layer (18) and extending only a short distance into the support plate (14).

8. Flow measuring device according to any of claims 1 to 7, **characterised in that** the flow measuring element (2) is lamella-shaped, with two opposite end sections, one of them forming a measuring section (7) equipped with the heating element (23) and the temperature sensor (24), and the other forming a connection section (8) provided with connection surfaces (12) for electrical contacting of the conductive structures (22).

9. Flow measuring device according to any of claims 1 to 8, **characterised in that** it has, in addition to the flow measuring element (2), a holding structure (3) serving for its fixing to a user component (4) and through which the flow measuring element (2) passes or is able to pass with sealing, so that a measuring section (7) of the flow measuring element (2) with the heating element (23) and the temperature sensor (24) is located on one side of the holding structure (3), and a connection section (8) of the flow measuring element (2) with connection surfaces (12) for the electrical contacting of the conductive structures (22) is located on the other side of the holding structure (3).

10. Flow measuring device according to claim 9, **characterised in that** the holding structure (3) has a ring- or frame-like sealing element (48), which encompasses with sealing the flow measuring element (2) passing through the holding structure (3).

11. Flow measuring device according to claim 10, **characterised in that** the sealing element (48) is a separate component from the flow measuring element (2) and has a slot-like aperture (47) through which the flow measuring element (2) passes or may pass, wherein it is expediently made of material with rubber-elastic properties and is in particular so designed that its boundary zones (52) bordering the slot-like aperture (47) fit tightly against one another to close the slot-like aperture (47) when the flow measuring element (2) is removed.

12. Flow measuring device according to any of claims 9 to 11, **characterised in that** the holding structure (3) has a holding sleeve (53) expediently made of a rigid material and having a fitting aperture (54) through which the flow measuring element (2) passes or may pass, and to which the flow measuring element (2) is or may be fixed.

13. Flow measuring device according to claim 12 in conjunction with claim 10 or 11, **characterised in that** the fitting aperture (54) is framed by a support wall (55) of the holding sleeve (53), against which the sealing element (48) is or may be axially pressed, wherein the contact force is expediently supplied by a clamping ring (63) encompassing the flow measuring element (2), which pressure-loads the sealing element (48) against the end face opposite the support wall (55) and presses against the support wall (55) and is expediently secured in a press fit in a recess (56) of the holding sleeve (53) adjoining the fitting aperture (54).

## Revendications

1. Dispositif de mesure d'écoulement, comprenant au moins un élément de mesure d'écoulement (2), qui comporte une plaque métallique de support (14) pourvue de deux surfaces de plaque (16, 17) opposées l'une à l'autre, une couche isolante (18) disposée sur une des surfaces de plaque (17) et des structures électroconductrices (22), disposées sur la couche isolante (18), réalisées selon une technique en couches fines, sachant que les structures conductrices (22) forment un élément de chauffage (23), un capteur de température (24) disposé à côté de ce dernier et des conducteurs de raccordement (25) reliés auxdits composants (23, 24), sachant que l'élément de chauffage (23) est disposé dans la zone d'un évidement (28), traversant entre les deux surfaces de plaque (16, 17), de la plaque de support (14) et qu'il s'étend, conjointement avec une section porteuse (32), les supportant, de la couche isolante (18) au-delà dudit évidement (28), sachant que la section porteuse (32) de la couche isolante (18) est réalisée de manière plus étroite que l'évidement (28) et est adjacente à des côtés longitudinaux opposés les uns aux autres de respectivement un passage (35a, 35b), communiquant avec l'évidement (28), de la couche isolante (18) de sorte que l'écoulement à mesurer d'un fluide peut traverser l'élément de mesure d'écoulement (2) en passant le long de l'élément de chauffage (23), sachant qu'un des passages (35a) jouxtant la section porteuse (32) est réalisé sous la forme d'un trou délimité tout autour par la couche isolante (18), **caractérisé en ce que** l'évidement (28), surmonté par la section porteuse (32), de la plaque de support (14) est ouvert latéralement en direction d'une zone de bord (38) de la plaque de support (14), sachant que le passage (35b), contigu à ladite zone de bord (38), de la couche isolante (18), est fermé côté périphérie uniquement en partie et est ouvert dans sa zone faisant face à la section porteuse (32).

2. Dispositif de mesure d'écoulement selon la revendication 1, **caractérisé en ce que** la section porteuse (32) de la couche isolante (18) est réalisée à la manière d'un ruban et recouvre l'évidement (28) de la plaque de support (18) à la manière d'une entretoise.

3. Dispositif de mesure d'écoulement selon la revendication 1 ou 2, **caractérisé en ce que** l'élément de mesure d'écoulement (2) présente une couche de recouvrement (27) disposée sur les structures conductrices (22) et recouvrant au moins en partie lesdites structures conductrices (22), ladite couche de recouvrement étant traversée de la même manière dans la zone du passage (35a, 35b) au moins au nombre de un jouxtant la section porteuse (32), sachant que l'élément de chauffage (23) est disposé de manière appropriée entre une section porteuse (32), présentant une forme de bande, de la couche isolante (18) et une section de recouvrement (33) de type bande de la couche de recouvrement (27).

4. Dispositif de mesure d'écoulement, comprenant au moins un élément de mesure d'écoulement (2), qui comporte une plaque métallique de support (14) pourvue de deux surfaces de plaque (16, 17) opposées l'une à l'autre, une couche isolante (18) disposée sur une des surfaces de plaque (17) et des structures électroconductrices (22) disposées sur la couche isolante (18), réalisées selon une technique en couches fines, sachant que les couches conductrices (22) forment un élément de chauffage (23), un capteur de température (24) disposé à côté de l'élément de chauffage et des conducteurs de raccordement (25) reliés auxdits composants (23, 24), sachant que l'élément de chauffage (23) est disposé dans la zone d'un évidement (28), traversant entre les deux surfaces de plaque (16, 17), de la plaque de support (14) et qu'il s'étend conjointement avec une section porteuse (32), les supportant, de la couche isolante (18) au-delà dudit évidement (28), sachant que la section porteuse (32) de la couche isolante (18) est réalisée de manière plus étroite que l'évidement (28) et est adjacente à uniquement un passage (35a), communiquant avec l'évidement (28), de la couche isolante (18), de sorte que l'écoulement à mesurer d'un fluide peut traverser l'élément de mesure d'écoulement (2) en passant le long de l'élément de chauffage (23), sachant que le passage (35a) jouxtant la section porteuse (32) est réalisé sous la forme d'un trou délimité tout autour par la couche isolante (18), **caractérisé en ce que** l'évidement (28), surmonté par la section porteuse (32), de la plaque de support (14) est ouvert latéralement en direction d'une zone de bord (38) de la plaque de support (14), et **en ce que** la section porteuse (32) se trouve directement dans le prolongement d'un des bords longitudinaux de l'évidement (28).

5. Dispositif de mesure selon l'une quelconque des revendications 1 à 4, **caractérisé en ce que** les surfaces de connexion (12), servant à l'établissement d'un contact électrique avec les structures conductrices (22), des structures conductrices (22) ne sont pas recouvertes par la couche de recouvrement (27).

6. Dispositif de mesure d'écoulement selon l'une quelconque des revendications 1 à 5, **caractérisé en ce que** la couche isolante (18) et/ou la couche de recouvrement (27) sont constituées d'un matériau à base de polyimide.

7. Dispositif de mesure d'écoulement selon l'une quelconque des revendications 1 à 6, **caractérisé en ce que** la plaque de support (14) est pourvue, en plus de l'évidement (28) associé à l'élément de chauffage (23), d'au moins une entaille de séparation (43) s'étendant de manière transversale et traversant entre les deux surfaces de plaque (16, 17) et/ou d'au moins une rainure transversale (44) s'étendant en partant de la surface de plaque (16) opposée à la couche isolante (18) uniquement un peu plus à l'intérieur de la plaque de support (14).

8. Dispositif de mesure d'écoulement selon l'une quelconque des revendications 1 à 7, **caractérisé en ce que** l'élément de mesure d'écoulement (2) est réalisé de manière à présenter une forme de lamelles, sachant qu'il présente deux sections d'extrémité opposées l'une à l'autre, parmi lesquelles une section d'extrémité constitue une section de mesure (7) dotée de l'élément de chauffage (23) et du capteur de température (24) tandis que l'autre section d'extrémité constitue une section de connexion (8) pourvue de surfaces de connexion (12) servant à établir un contact électrique avec les structures conductrices (22).

9. Dispositif de mesure d'écoulement selon l'une quelconque des revendications 1 à 8, **caractérisé en ce que** ledit dispositif de mesure d'écoulement présente, en plus de l'élément de mesure d'écoulement (2), une structure de maintien (3) servant à la fixation dudit élément de mesure d'écoulement au niveau d'un composant d'application (4), ladite structure de maintien étant traversée ou pouvant être traversée par l'élément de mesure d'écoulement (2) de manière à assurer l'étanchéité de sorte qu'une section de mesure (7), présentant l'élément de chauffage (23) et le capteur de température (24), de l'élément de mesure d'écoulement (2) est disposée sur un côté de la structure de maintien (3) et qu'une section de connexion (8), pourvue de surfaces de connexion (12) servant à établir un contact électrique avec les structures conductrices (22), de l'élément de mesure d'écoulement (2) est disposée sur l'autre côté de la structure de maintien (3).

10. Dispositif de mesure d'écoulement selon la revendication 9, **caractérisé en ce que** la structure de maintien (3) présente un élément étanche (48) réalisé de manière à présenter une forme de bague ou de cadre, l'élément étanche renfermant de manière à assurer l'étanchéité l'élément de mesure d'écoulement (2) traversant la structure de maintien (3).

11. Dispositif de mesure d'écoulement selon la revendication 10, **caractérisé en ce que** l'élément étanche (48) est un composant séparé par rapport à l'élément de mesure d'écoulement (2) et dispose d'une ouverture (47) de type entaille traversée ou pouvant être traversée par l'élément de mesure d'écoulement (2), sachant que l'élément étanche est constitué de manière appropriée d'un matériau présentant des propriétés élastiques et est réalisé en particulier de telle manière que ses zones de bord (52) délimitant l'ouverture (47) de type entaille reposent les unes contre les autres de manière étanche en fermant l'ouverture (47) de type entaille lorsque l'élément de mesure d'écoulement (2) est retiré.

12. Dispositif de mesure d'écoulement selon l'une quelconque des revendications 9 à 11, **caractérisé en ce que** la structure de maintien (3) dispose d'une manchette de maintien (53) constituée de manière appropriée d'un matériau rigide, ladite manchette de maintien présentant une ouverture de montage (54) traversée ou pouvant être traversée par l'élément de mesure d'écoulement (2) et étant fixée ou pouvant être fixée à l'élément de mesure d'écoulement (2).

13. Dispositif de mesure d'écoulement selon la revendication 12 en lien avec la revendication 10 ou 11, **caractérisé en ce que** l'ouverture de montage (54) est encadrée par une paroi de soutien (55) de la manchette de maintien (53), contre laquelle l'élément étanche (48) est pressé ou peut être pressé axialement, sachant que la force de compression est fournie de manière appropriée par une bague de serrage (63) entourant l'élément de mesure d'écoulement (2), laquelle bague de serrage sollicite l'élément étanche (48) au niveau du côté frontal opposé à la paroi de soutien (55) et le pousse contre la paroi de soutien (55), et laquelle est fixée de manière appropriée par un ajustement serré dans un creux (56), se trouvant dans le prolongement axial de l'ouverture de montage (54), de la manchette de maintien (53).
